Europäisches Patentamt

European Patent Office

Office européen des brevets

(19)

(11) Veröffentlichungsnummer: **0 169 508**
**B1**

(12) **EUROPÄISCHE PATENTSCHRIFT**

(45) Veröffentlichungstag der Patentschrifft:
07.02.90

(21) Anmeldenummer: 85109040.7

(22) Anmeldetag: 19.07.85

(51) Int. Cl. 5: **C 04 B 28/14**

(54) Baustoff aus Phospho-Hemihydrat, Verfahren zu seiner Herstellung und seine Verwendung.

(30) Priorität: 24.07.84 DE 3427239

(43) Veröffentlichungstag der Anmeldung:
29.01.86 Patentblatt 86/05

(45) Bekanntmachung des Hinweises auf die Patenterteilung:
07.02.90 Patentblatt 90/06

(84) Bennante Vertragsstaaten:
BE DE NL

(56) Entgegenhaltungen:
BE-A-885 712
DE-A-2 002 570
DE-A-3 151 881
DE-B-1 224 190
FR-A-1 558 566
FR-A-2 273 766

(73) Patentinhaber: B.V. Projectbureau voor Industrieel Afval,
P.B.I.
Hertogsingel 83 Postbus 1187
NL-6201 BB Maastricht (NL)

(72) Erfinder: Wirsching, Franz, Dr.
In den Weinbergen 7
D-8715 Iphofen (DE)

(74) Vertreter: Werner, Hans-Karsten, Dr.
Deichmannhaus am Hauptbahnhof
D-5000 Köln 1 (DE)

## Beschreibung

Bei der Herstellung von Phosphorsäure nach den Naßverfahren entstehen erhebliche Mengen Phosphogips, die bisher nur in beschränktem Umfang verwertet werden konnten. Die weitaus überwiegende Menge des anfallenden Phosphogipses, nämlich weit mehr als 100 Millionen Tonnen pro Jahr muß beseitigt werden, wobei insbesondere die Verklappung auf See oder das direkte Einspülen ins Meer aus ökologischen Gründen in Zukunft unterbleiben sollte. Es besteht somit ein erhebliches Bedürfnis, Phosphogips nicht nur ökologisch sondern auch ökonomisch besser zu verwerten; vgl. hierzu F. Wirsching, Rückstände aus der Phosphorsäureproduktion, Müll- und Abfallbeseitigung 1982, Kennzahl 8581. Erich Schmidt Verlag Berlin, Bielefeld, München.

Der Phosphogips fällt bei den meisten Naßverfahren als stabiles Dihydrat an. In den letzten Jahren sind jedoch auch einige Verfahren entwikkelt und in die Praxis umgesetzt worden, bei denen die metastabile α-Hemihydratform, daß sogenannte Phospho-Hemihydrat, anfällt.

Dieses Phospho-Hemihydrat wird zwar bereits in gewissem Umfang für Baustoffe verwertet, jedoch werden die größten Mengen noch immer ins Meer gepumpt oder deponiert. Es besteht somit ein erhebliches Bedürfnis danach, Phospho-Hemihydrat anderen, sinnvollen und ökologisch einwandfreien Verwendungen zuzuführen. Aus den DE-OSen-3 151 881 und 3 151 882 der Anmelderin ist bekannt, Phospho-Hemihydrat im getrockneten Zustand als Bindemittelkomponente in Mörtelmischungen zu verwenden, die für die untertägige Streckensicherung bestimmt sind. Dabei wird dem Phospho-Hemihydrat gewünschtenfalls als Abbindebeschleuniger ein alkalisch reagierender Stoff wie Kalkhydrat oder Zement zugesetzt. Diese Zusätze verlängern jedoch die Versteifungszeiten, so daß gewünschtenfalls obendrein ein Alkalisulfat zugesetzt werden soll. Aus den Beispielen der DE-OS-3 151 881 geht hervor, daß die Gemische 25 bzw. 30 Gew.-% Phospho-Hemihydrat enthalten haben. Über den Wassergehalt der Gemische werden keine Aussagen gemacht. Die dabei entstehenden Produkte neigen zwar zu erheblichen Schwankungen sowie Ausblühungen aufgrund des hohen Gehalts an leichtlöslichen Salzen, die für einen handelsüblichen Baugips undenkbar wären. Diese Produkte genügen jedoch zumindest für die untertägige Streckensicherung. Weitere Versuche der Anmelderin haben ergeben, daß eine Steigerung des Gehaltes an Phospho-Hemihydrat auf ca. 50 Gew.-% zu einer derartigen Verschlechterung der Gesamteigenschaften führt, daß diese Gemische nicht einmal mehr für die untertägige Streckensicherung geeignet wären. Ein weiterer Nachteil der hierin beschriebenen Verwendung von Phospho-Hemihydrat besteht darin, daß dieses zuvor unter erheblichem Energieaufwand getrocknet werden muß.

Aus der DE-AS-1 224 190 ist ein Verfahren zur Aufbereitung von synthetischem Gips bekannt, bei welchem dem sauer reagierende Verunreinigungen enthaltende Calciumsulfat-Dihydrat oder Calciumsulfathalbhydrat 2 bis 10 Gew.-% aluminathaltige und/oder silikathaltige hydraulische oder latent hydraulische Materialien zugegeben werden. Dabei werden rasch abbindende Prüfkörper erhalten, die gegenüber Stuckgips einen leichten Festigkeitsanstieg (10 bis 20 %) bei gleicher Abbindezeit, aber keine Ausblühungen zeigten. Es wurde jedoch stets mit erheblichen Wasserüberschüssen gearbeitet, die stets einen breiartigen Mörtel ergeben. Über den pH-Wert werden keine Angaben gemacht.

Es wurde jetzt überraschenderweise gefunden, daß feuchtes Phospho-Hemihydrat durch Zusatz von nur 3 bis 35 Gew.-% Flugasche und 2 bis 5 Gew.-% Kalkhydrat oder Zement zu einem erdfeuchten, maximal verdichtbaren Gemisch mit einem pH-Wert von größer als 9 verarbeitet werden kann, und dabei einen wertvollen, abbindenden Baustoff liefert, das aufgrund seiner Eigenschaften exzellent geeignet ist zum Landschaftsbau, Tiefbau, zum Bau von Dämmen, Deichen, Flugplätzen, hochbelasteten Parkplätzen sowie zur Herstellung von Baumaterial in Blöcken oder als Zuschlagstoff. Weiterhin ist der Baustoff gut geeignet als Bergbaumörtel sowie zum Wannenbau und zur Einkapselung von Deponien.

Gegenstand der vorliegenden Erfindung ist somit ein Baustoff, enthaltend (bezogen auf die Trockensubstanz) 62 bis 95 Gew.-% Phospho-Hemihydrat, 3 bis 35 Gew.-% Flugasche und 2 bis 5 Gew.-% Kalkhydrat oder Zement, dadurch gekennzeichnet, daß die Bestandteile als erdfeuchtes, maximal verdichtbares Gemisch mit einem Wasser-Feststoff-Verhältnis von 0,18 bis 0,22 und einem pH-Wert von größer als 9 vorliegen.

Die Erfindung betrifft weiterhin das Verfahren zur Herstellung eines Baustoffes, enthaltend (bezogen auf die Trockensubstanz) 62 bis 95 Gew.-% Phospho-Hemihydrat, 3 bis 35 Gew.-% Flugasche und 2 bis 5 Gew.-% Kalkhydrat oder Zement, dadurch gekennzeichnet, daß man

a) das filterfeuchte Phospho-Hemihydrat unter Zusatz von im sauren Milieu wirksamen Stabilisatoren mit Wasser anmaischt, ggf. transportiert und/oder lagert,

b) das suspendierte Phospho-Hemihydrat erneut abtrennt und

c) das so erhaltene feuchte Phospho-Hemihydrat mit 3 bis 35 Gew.-% Flugasche, 2 bis 5 Gew.-% Kalkhydrat oder Zement und Wasser zu einem erdfeuchten, maximal verdichtbaren Baustoff mit einem Wasser-Feststoff-Verhältnis von 0,18 bis 0,22 und einem pH-Wert von größer als 9 vermischt.

Erdfeuchte, maximal verdichtbare Gemische sind solche, die maximale Proctordichte aufweisen. Die Proctordichte wird beispielsweise nach der DIN 18 127 oder nach ASTM-D 698-70 bestimmt. Bei den erfindungsgemäßen Baustoffen wird die maximale Proctordichte bei Wasser-Feststoff-Verhältnissen (WFV) von 0,18 bis 0,22, vorzugsweise 0,19 bis 0,21 erreicht.

Der erfindungsgemäße Baustoff bindet zwar relativ langsam ab, bildet dabei aber Produkte von hohem Raumgewicht, hoher Druckfestigkeit, niedriger Wasserdurchlässigkeit und niedriger Eluierbarkeit durch Wasser oder Salzwasser. Das langsame Abbinden führt dazu, daß auch innerhalb von Tagen nachträglich aufgegebene Schichten sich fest mit den vorhergehenden Schichten verbinden und dabei ein raumstabiles, nicht schwindendes Material liefern. Das langsame Abbinden gewährleistet weiterhin, daß es zu keinem schädlichem Wärmestau während des Abbindens kommt, der oft die Ursache für Inhomogenitäten und Schwachstellen des gebundenen Materials ist. Der hohe pH-Wert von größer als 9, vorzugsweise sogar größer als 11, gewährleistet, daß nicht nur alle unerwünschten Anionen wie Chloride, Fluoride etc., sondern auch alle Schwermetalle fest in das Material eingebunden werden und nicht ausgelaugt werden können.

Das bei der Herstellung von Phosphorsäure anfallende filterfeuchte Phospho-Hemihydrat neigt normalerweise dazu, relativ rasch in das Dihydrat überzugehen und dadurch sich bezüglich der Handhabbarkeit und der Eigenschaften rasch zu verschlechtern. Zur Durchführung des erfindungsgemäßen Verfahrens wird daher das filterfeuchte Phospho-Hemihydrat zunächst unter Zusatz im sauren Milieu wirksamen Stabilisatoren mit Wasser angemaischt und in dieser Form ggf. transportiert und/oder gelagert. Als im sauren Milieu wirksame Stabilisatoren kommen gemäß DE-AS-2 155 617 Alkylarylsulfonsäure, Alkylenoxidkondensate von Alkoholen, Phenolen oder Alkylphenolen und/oder den Derivaten dieser Säuren in Frage. Vorzugsweise werden jedoch gemäß DE-AS-2 427 122 wässrige Lösungen von kondensierten und komplexen Aluminiumfluoriden sowie Aluminiumfluoridhydrate verwendet. Unter Zusatz derartiger Stabilisatoren kann das filterfeuchte Phospho-Hemihydrat mit ausreichenden Mengen von Wasser angemaischt und leicht transportiert und/oder gelagert werden. Aus diesen Suspensionen läßt sich das Phospho-Hemihydrat leicht abtrennen, beispielsweise durch Filtrieren, oder auch durch einfaches Absetzen und Dekantieren. Das saure Filtrat enthält im allgemeinen noch soviel Phosphorsäure, daß es sinnvoll ist, es in die Phosphorsäurefabrik zurückzuleiten und dort zu verwerten.

Das so erhaltene feuchte Phospho-Hemihydrat wird jetzt erfindungsgemäß in einer Menge von bezogen auf die Trockensubstanz 62 bis 95 Gew.-% mit 3 bis 35 Gew.-% Flugasche und 2 bis 5 Gew.-% Kalkhydrat oder Zement sowie gegebenenfalls noch geringen Mengen Wasser zu einem erdfeuchten, maximal verdichtbaren Baustoff vermischt. Dabei hat sich gezeigt, daß die im feuchten Phospho-Hemihydrat enthaltene Wassermenge schon nahezu ausreicht, zusammen mit der Flugasche und dem Kalkhydrat bzw. Zement, die gewünschte Proctordichte, d.h. die maximal verdichtbare Befeuchtung zu liefern.

Durch den Zusatz von 2 bis 5 Gew.-% Kalkhydrat oder Zement wird vor allem gewährleistet, daß der pH-Wert größer als 9, vorzugsweise größer als 11 ist. Dieser hohe pH-Wert ist vor allem erforderlich, um auch alle Schwermetalle dauerhaft zu binden. Sofern die Chromwerte nicht ohne weiteres niedrig genug sind, ist es auch bei den erfindungsgemäßen Baustoffen möglich, durch Zusatz von Eisen II-Sulfat die auslaugbaren Chrommengen zu senken.

Der so erhaltene Baustoff kann jetzt in an sich bekannter Weise in Schichten aufgetragen und verdichtet werden. Die Abbindung erfolgt so langsam, daß später aufgebrachte Schichten auch nach einigen Tagen noch eine feste Verbindung mit den früheren Schichten eingehen. Dies ist insbesondere auch darauf zurückzuführen, daß der neue Baustoff raumstabil ist und nicht schwindet.

Nach dem Abbinden entstehen betonartige Produkte mit Raumgewichten von über 1,80. Insbesondere bei Verwendung von Flugaschen mit hohem Schütt- und Stampfgewicht erhält man Raumgewichte zwischen 1,8 und 2,0. Vergleichsversuche aus den gleichen Komponenten, bei denen jedoch anstelle des Phospho-Hemihydrats, das Phospho-Dihydrat eingesetzt wurde, ergaben Produkte mit Raumgewichten zwischen 1,6 und 1,75. Auch die Druckfestigkeit derartiger Vergleichsprodukte lag nur zwischen 5 und 10 MN/m$^2$, während die erfindungsgemäßen Baustoffe Druckfestigkeiten von über 20 MN/m$^2$ liefern. Messungen der Wasserdurchlässigkeit von Prüfkörpern ergaben, daß die Wasserdurchlässigkeit von Prüfkörpern aus dem erfindungsgemäßen Material einen K-Wert von kleiner als $10^{-9}$ m/s besitzen, während die entsprechenden Prüfkörper bei der Verwendung von Phospho-Dihydratgips K-Werte um $10^{-7}$ bis $10^{-8}$ zeigten.

Auch die Auslaugbarkeit der Prüfkörper durch Wasser und Salzwasser liegt bei Prüfkörpern aus dem erfindungsgemäßen Baustoff erheblich niedriger. Der Zusatz von mindestens 3 Gew.-% Flugasche bewirkt, daß die Wasserlöslichkeit erheblich verringert und die Permeabilität wesentlich verbessert wird, wobei die Druckfestigkeit um mindestens 20 % steigt. Besonders gute Ergebnisse erhält man mit Flugaschen, die puzzolanaktiv sind (Puzzolanaktivitätstest ISO R 863).

Eine besondere Ausgestaltung des erfindungsgemäßen Baustoffes und des Verfahrens zur seiner Herstellung besteht darin, anstelle des Gemisches von Flugasche und Kalkhydrat oder Zement ein trockenes, pulverförmiges Flugaschederivat mit mindestens 4 Gew.-% Calciumhydroxid einzusetzen. Ein derartiges Flugaschederivat ist beispielsweise herstellbar nach dem Verfahren der deutschen Patentanmeldung P 33 47 375.7. Hierbei wird Flugasche aus dem Trockenadditiv-Verfahren in der Weise mit Wasser behandelt, daß das ursprünglich vorhandene Calciumoxid vollständig abgelöscht und in Calciumhydroxid überführt wurde. Sofern also dieses Derivat in räumlicher Nähe von der Phosphorsäurefabrik zur Verfügung steht, kann auf den Zusatz von Kalkhydrat oder Zement verzichtet werden.

Der erfindungsgemäße Baustoff aus Phospho-Hemihydrat ist nach dem Abbinden betonähnlich bezüglich der mechanischen Stabilität. Er ist jedoch dem normalen Beton bezüglich Wasserdurchlässigkeit und Auslaugbarkeit erheblich überlegen. Prinzipiell ist es zwar möglich, auch dem erfindungsgemäßen Baustoff auch übliche Zuschlagstoffe zuzusetzen. Die technologischen Eigenschaften sind jedoch so günstig, daß hierauf ohne weiteres verzichtet werden kann. Zement hingegen muß unbedingt mit Zuschlagstoffen versetzt werden, da er andernfalls schwindet, keine Festigkeit erreicht und unbrauchbar wird. Der erfindungsgemäße Baustoff bindet zwar wesentlich langsamer als Beton ab, dafür weist er jedoch nach dem Abbinden eine Reihe von interessanten Vorteilen auf, die ihn insbesondere für den Landschaftsbau, Tiefbau, den Bau von Dämmen, Deichen, Flugplätzen, hochbelasteten Parkplätzen und die Herstellung von Baumaterial in Blöcken oder als Zuschlagstoff interessant macht. Aber auch als Bergbaumörtel sowie beim Wannenbau und bei der Einkapselung von Deponien kann er gut eingesetzt werden.

Das erfindungsgemäße Verfahren ist ökologisch besonders interessant, da es zunächst einmal große Mengen des anfallenden Phospho-Hemihydrats sinnvoll und umweltfreundlich verwertet. Darüberhinaus wird die Flugasche von Kohlekraftwerken sinnvoll verwertet, und zwar so, daß alle darin vorhandenen wasserlöslichen Bestandteile fest gebunden werden. Insbesondere bei Verwendung des trockenen, pulverförmigen Flugaschederivats mit mindestens 4 Gew.-% Calciumhydroxid kann man sich den Zusatz von Kalkhydrat oder Zement ersparen und trotzdem zu optimalen Ergebnissen kommen.

Die Mengenverhältnisse Phospho-Hemihydrat zu Flugasche können in den angegebenen Grenzen variiert werden und liefern stets einen wertvollen und gut verarbeitbaren Baustoff. Die Mengen können somit auch je nach mengenmäßigem Anfall der beiden Abfallprodukte gewählt oder variiert werden. Um Qualitätsschwankungen beim abgebundenen Produkt unter praktischen Bedingungen zu vermeiden, wird man daher die Menge der Flugasche vorzugsweise im Bereich zwischen 5 und 20 Gew.-% wählen. Sicherheitshalber wird man auch die Menge an Kalkhydrat oder Zement in den Bereich zwischen 3 und 4,5 % wählen. Bei Verwendung eines trockenen, pulverförmigen Flugaschederivats mit ca. 20 bis 25 Gew.-% Calciumhydroxid erhält man somit ebenfalls optimale Ergebnisse bei einem Zusatz von 10 bis 25 Gew.-%.

In den nachfolgenden Beispielen sind der erfindungsgemäße Baustoff aus Phospho-Hemihydrat sowie das Verfahren zu seiner Herstellung näher erläutert.

**Beispiel 1**

Filterfeuchtes Phospho-Hemihydrat mit 19 % Filterfeuchtigkeit wird in einem Rührgefäß mit Wasser angemaischt, in welchem vorher 1 kg Chiolith/m$^3$ Waschwasser gelöst war. Diese Suspension enthält etwa 30 % Feststoff und ist lager- und pumpfähig. Sie wird nach Bedarf abfiltriert oder dekantiert. Das saure Filtrat enthält noch gewisse Mengen von Phosphorsäure. Das so erhaltene filterfeuchte Phospho-Hemihydrat enthält etwa zwischen 18 und 20 % Restfeuchte. Es wird in einem Betonzwangs-Mischer mit 5 % Zement und nacheinander verschiedenen Mengen Flugasche vermischt, wobei jeweils soviel Wasser zugegeben wird, daß die maximale Verdichtbarkeit (Proctordichte) erzielt wird. Die Proctordichte einer Grundmischung aus 95 Gew.-% Phospho-Hemihydrat und 5 % Zement beträgt nach der Herstellung 1,752 bei einem Wasser-Feststoff-Verhältnis (WFS) von 0,18. Diese Proctordichte steigt bei Zusatz von 5 % Flugasche und einem WFS von 0,20 auf 1,810, bei 20 % Flugasche und einem WFS von 0,20 auf 1,821 und bei Zusatz von 35 % Flugasche und einem WFS von 0,21 auf 1,836. Die Druckfestigkeit aller dieser erfindungsgemäßen Prüfkörper liegt bei 23,5; 21,6 und 17,3 MN/m$^2$ und die Wasserdurchlässigkeit K liegt bei $7{,}0 \cdot 10^{-10}$; $6{,}3 \cdot 10^{-10}$ und $7{,}8 \cdot 10^{-10}$ m/s.

Vergleichsmessungen mit Prüfkörpern aus Phospho-Dihydratgips, 5 % Zement und den selben Mengen der gleichen Flugasche ergeben Proctordichten der Grundmischung von 1,704. Durch Zusatz von Flugasche steigt die Proctordichte auf Werte von 1,709; 1,720 und 1,736. Die Druckfestigkeit der Prüfkörper liegt bei 1,20; 1,68 und 2,09 MN/m$^2$ und die Wasserdurchlässigkeit K im Bereich von $10^{-7}$ bis $10^{-8}$ m/s.

**Beispiel 2**

Herstellung eines Baumaterials in Form von Zuschlagstoff.

Ein erfindungsgemäßer Proctorzylinder gemäß Beispiel 1 wird nach einer Lagerzeit von 4 Wochen gebrochen und zerkleinert auf eine Korngröße von 0 bis 8 mm. Die erhaltenen Körner sind in ihren Festigkeitseigenschaften mit anderen schwach porösen Zuschlagstoffen, wie z. B. schwach porösem Bims, vergleichbar. Dieser Zuschlagstoff kann zur Herstellung eines Flugaschebetons verwendet werden, der auch als Bergbaumörtel eingesetzt werden kann.

**Beispiel 3**

Herstellung eines Baumaterials in Form von Blöcken.

Eine erdfeuchte Mischung (WFS = 0,20) aus Phospho-Hemihydrat (90 Teile), Flugasche mit Schüttgewicht 1,1 (7 Teile) und Zement PZ 35 (3 Teile) wird zu einem Mauerstein (11er) verdichtet.

Dieser Mauerstein wird 4 Wochen an der Luft gelagert und ist dann verwendungsfähig zum Bau von tragenden Bauteilen, bevorzugt im Innenteil von Gebäuden.

## Patentansprüche

1. Baustoff, enthaltend (bezogen auf die Trockensubstanz) 62 bis 95 Gew.-% Phospho-Hemihydrat, 3 bis 35 Gew.-% Flugasche und 2 bis 5 Gew.-% Kalkhydrat oder Zement, dadurch gekennzeichnet, daß die Bestandteile als erdfeuchtes, maximal verdichtbares Gemisch mit einem Wasser-Feststoff-Verhältnis von 0,18 bis 0,22 und einem pH-Wert von größer als 9 vorliegen.

2. Baustoff gemäß Anspruch 1, dadurch gekennzeichnet, daß eine Flugasche mit hohem Schütt- und Stampfgewicht eingesetzt wird.

3. Baustoff gemäß Anspruch 1 oder 2, dadurch gekennzeichnet, daß anstelle des Gemisches von Flugasche und Kalkhydrat oder Zement ein trockenes, pulverförmiges Flugaschederivat mit mindestens 4 Gew.-% Calciumhydroxid eingesetzt wird.

4. Verfahren zur Herstellung eines Baustoffes, enthaltend (bezogen auf die Trockensubstanz) 62 bis 95 Gew.-% Phospho-Hemihydrat, 3 bis 35 Gew.-% Flugasche und 2 bis 5 Gew.-% Kalkhydrat oder Zement, dadurch gekennzeichnet, daß man

a) das filterfeuchte Phospho-Hemihydrat unter Zusatz von im sauren Milieu wirksamen Stabilisatoren mit Wasser anmaischt, ggf. transportiert und/oder lagert,
b) das suspendierte Phospho-Hemihydrat erneut abtrennt und
c) das so erhaltene feuchte Phospho-Hemihydrat mit 3 bis 35 Gew.-% Flugasche, 2 bis 5 Gew.-% Kalkhydrat oder Zement und Wasser zu einem erdfeuchten, maximal verdichtbaren Baustoff mit einem Wasser-Feststoff-Verhältnis von 0,18 bis 0,22 und einem pH-Wert von größer als 9 vermischt.

5. Verfahren gemäß Anspruch 4, dadurch gekennzeichnet, daß das Filtrat der Stufe b) in die Phosphorsäurefabrik zurückgeleitet und dort verwertet wird.

6. Verfahren gemäß Anspruch 4 oder 5, dadurch gekennzeichnet, daß anstelle des Gemisches von Flugasche und Kalkhydrat oder Zement ein trockenes, pulverförmiges Flugaschederivat mit mindestens 4 Gew.-% Calciumhydroxid eingesetzt wird.

7. Verwendung des Baustoffes gemäß Ansprüchen 1 bis 6 zum Landschaftsbau, Tiefbau, zum Bau von Dämmen, Deichen, Flugplätzen, hochbelasteten Parkplätzen und zur Herstellung von Baumaterial in Blöcken oder als Zuschlagstoff.

8. Verwendung des Baustoffes gemäß Ansprüchen 1 bis 6 als Bergbaumörtel sowie zum Wannenbau und zur Einkapselung von Deponien.

## Claims

1. A building material containing (based on dry matter) 62 to 95 % by weight of phospho-hemihydrate, 3 to 35 % by weight of fly ash, and 2 to 5 % by weight of lime hydrate or cement, characterized in that the components are present as an earth-moist maximum-compactable mixture having a water-to-solids ratio of from 0.18 to 0.22 and a pH value in excess of 9.

2. The building material according to claim 1, characterized in that a fly ash having a high bulk weight and high tamped weight is employed.

3. The building material according to claims 1 or 2, characterized in that a dry powdery fly ash derivative comprising at least 4 % by weight of calcium hydroxide is employed in the place of the mixture of fly ash and lime hydrate or cement.

4. A process for producing a building material containing (based on dry matter) 62 to 95 % by weight of phospho-hemihydrate, 3 to 35 % by weight of fly ash, and 2 to 5 % by weight of lime hydrate or cement, characterized in that

a) the earth-moist phospho-hemihydrate is mixed to form a mash with water and with the addition of stabilizers active in an acidic medium and said mash, if so desired or required, is transported and/or stored,
b) the suspended phospho-hemihydrate is again separated off, and
c) the obtained moist phospho-hemihydrate is mixed with from 3 to 35 % by weight of fly ash and from 2 to 5 % by weight of lime hydrate or cement to form an earth-moist maximum-compactable building material having a water-to-solids ratio of from 0.18 to 0.22 and a pH value in excess of 9.

5. The process according to claim 4, characterized in that the filtrate of step b) is recycled to the phosphoric acid plant and utilized there.

6. The process according to claims 4 or 5, characterized in that a dry powdery fly ash derivative comprising at least 4 % by weight of calcium hydroxide is employed in the place of the mixture of fly ash and lime hydrate or cement.

7. Use of the building material according to claims 1 to 6 for landscape building, civil engineering, for building dams, dikes, airports, highly used parking lots, and for the manufacture of building materials in blocks or as loading material.

8. Use of the building material according to claims 1 to 6 for mining mortar and for building troughs and for the encapsulation of dumps.

**Revendications**

1. Matériau de construction contenant (rapportés à la substance sèche) 62 à 95 % en poids de phospho-hémihydrate de 3 à 35 % en poids de cendre volante et de 2 à 5 % en poids de chaux hydratée ou de ciment, caractérisé en ce que les composants se présentent sous forme de mélange présentant l'humidité du sol, pouvant être condensés au maximum avec un rapport eau-corps solides de 0,18 à 0,22 et une valeur de pH supérieure à 9.

2. Matériau de construction suivant la revendication 1, caractérisé en ce que l'on met en oeuvre une cendre volante possédant un poids spécifique apparent et un poids à l'état damé élevés.

3. Matériau de construction suivant la revendication 1 ou 2, caractérisé en ce qu'au lieu du mélange de cendre volante et de chaux hydratée ou de ciment, on utilise un dérivé de cendre volante pulvérulent, sec, comportant au moins 4 % en poids d'hydroxyde de calcium.

4. Procédé de fabrication d'un matériau de construction, contenant (rapportés à la substance sèche) 62 à 95 % en poids de phospho-hémihydrate, 3 à 35 % de cendre volante et 2 à 5 % en poids de chaux hydratée ou de ciment, caractérisé en ce que

   a) on malaxe, éventuellement transporte et/ou conserve le phospho-hémihydrate présentant l'humidité de filtration avec de l'eau en recourant à l'addition de stabilisants actifs en milieu acide

   b) on sépare à nouveau le phospho-hémihydrate mis en suspension et

   c) on mélange le phospho-hémihydrate humide ainsi obtenu à 3 à 35 % en poids de cendre volante, 2 à 5 % en poids de chaux hydratée ou de ciment et de l'eau, en un matériau de construction présentant l'humidité du sol, condensable au maximum, avec un rapport eau-corps solides de 0,18 à 0,22 et une valeur de pH supérieure à 9.

5. Procédé suivant la revendication 4, caractérisé en ce que l'on ramène le filtrat de l'étape b) à la fabrique d'acide phosphorique et on l'y ré-exploite.

6. Procédé suivant la revendication 4 ou 5, caractérisé en ce qu'au lieu du mélange de cendre volante et de chaux hydratée ou de ciment, on met en oeuvre un dérivé de cendre volante, pulvérulent, sec, avec au moins 4 % en poids d'hydroxyde de calcium.

7. Utilisation du matériau de construction suivant les revendications 1 à 6 pour les travaux d'horticulture, y compris le jardinage, le génie civil, la construction de barrages, de digues, d'aérodromes, de parkings à forte charge et pour la fabrication de matériaux de construction en blocs ou sous forme d'agrégat ou d'additif.

8. Utilisation du matériau de construction suivant l'une quelconque des revendications 1 à 6, à titre de mortier pour exploitation minière, comme aussi pour le cuvelage et pour l'enfouissement ou enrobage ou enveloppement de dépôts ou décharges de déchets.